**Europäisches Patentamt**

**European Patent Office**

**Office européen des brevets**

(19)

(11) Veröffentlichungsnummer: **0 186 097**
**B1**

(12) **EUROPÄISCHE PATENTSCHRIFT**

(45) Veröffentlichungstag der Patentschrift:
12.07.89

(51) Int. Cl.⁴: **A 47 J 31/047**

(21) Anmeldenummer: **85116075.4**

(22) Anmeldetag: **17.12.85**

(54) **Elektrische Kaffeemaschine mit Warmhalteplatte.**

(30) Priorität: **22.12.84 DE 3447237**

(43) Veröffentlichungstag der Anmeldung:
**02.07.86 Patentblatt 86/27**

(45) Bekanntmachung des Hinweises auf die Patenterteilung:
**12.07.89 Patentblatt 89/28**

(84) Benannte Vertragsstaaten:
**AT DE FR GB IT NL**

(56) Entgegenhaltungen:
**AT-B-230 044**
**DE-A-1 429 848**

(73) Patentinhaber: **Braun Aktiengesellschaft,
Rüsselsheimer Strasse 22, D-6000 Frankfurt/Main
(DE)**

(72) Erfinder: **Schiebelhuth, Heinz, An der Nachtweide
17, D-6000 Frankfurt/M. 50 (DE)**
Erfinder: **Wonka, Boris, Beethovenstrasse 78,
D-6078 Neu- Isenburg (DE)**

(74) Vertreter: **Einsele, Rolf, Braun Aktiengesellschaft
Postfach 1120 Frankfurter Strasse 145, D-6242
Kronberg Taunus (DE)**

EP 0 186 097 B1

**Beschreibung**

Die Erfindung betrifft eine elektrische Kaffeemaschine mit einem über einen Bimetallregler betriebenen elektrischen Brühwassererhitzer und einer durch den Heizwiderstand des Brühwassererhitzers beheizten Warmhalteplatte für den zubereiteten Kaffee.

Derartige Kaffeemaschinen sind heute allgemein üblich (siehe DE-A-2 839 140). Sie enthalten einen Kaltwassertank, aus dem das Wasser zunächst in einen im allgemeinen als Durchlauferhitzer ausgebildeten Brühwassererhitzer gelangt. In diesem wird das Wasser auf die Brühtemperatur erhitzt und über ein Steigrohr dem das Kaffeemehl enthaltenden Filtertrichter zugeleitet, aus dem der Kaffee dann in eine darunterstehende Kaffeekanne fließt. Um den Kaffee während des Brühens und auch danach nicht abkühlen zu lassen und ihn auf der erwünschten hohen Trinktemperatur zu halten, steht die Kaffeekanne dabei auf einer Warmhalteplatte, zu deren Erwärmung im allgemeinen der Heizkörper des Brühwassererhitzers genutzt wird. Damit dieser Heizkörper die ihm dabei zukommende Doppelfunktion der Wassererhitzung und der Warmhaltung des zubereiteten Kaffees ordnungsgemäß erfüllen kann, wird er über einen temperaturabhängigen Reglerschalter - im allgemeinen einen Bimetallregler - betrieben, durch den er aus- und eingeschaltet wird sobald er eine vorgegebene Höchst- bzw. Mindesttemperatur über- bzw. unterschreitet.

Die hierfür erforderliche Abstimmung des Reglerschalters ging bei bisherigen Kaffeemaschinen davon aus, daß die Erhitzung der Warmhalteplatte nach Beendigung des Brühvorganges durch periodisches Ein- und Ausschalten des Heizwiderstandes zur Warmhaltung der maximalen Kaffee-Brühmenge der betreffenden Kaffeemaschine ausreichen mußte. Dies führte dazu, daß der zubereitete Kaffee auf der Warmhalteplatte einer auf maximal beispielsweise 10 oder 12 Tassen ausgelegten Kaffeemaschine einer ständigen temperaturerhöhenden Erhitzung ausgesetzt war, wenn nur beispielsweise 2 oder 3 Tassen zubereitet worden waren oder der Kanneninhalt auf eine entsprechend geringe Menge abgenommen hatte.

Da sich herausgestellt hat, daß bestimmte erwünschte Geschmackskomponenten des Kaffees durch das ständige Nachheizen zerstört oder zumindest beeinträchtigt werden können, wurde bereits versucht, derartige Kaffeemaschinen dadurch an die Zubereitung bzw. Warmhaltung kleiner Kaffeemengen anzupassen, daß die gemeinsame Heizung des Brühwasserbereiters und der Warmhalteplatte nicht mehr im Vollwellenbetrieb, sondern durch Zuschalten einer Diode in den Heizstromkreis im Halbwellenbetrieb mit der Netz-Wechselspannung versorgt wurde. Es zeigte sich jedoch, daß mit dieser Maßnahme das angestrebte Ziel einer verminderten Kaffeeerhitzung nicht erreichbar war, da auf diese Weise lediglich eine ganz geringfügige Verlängerung der Einschaltdauer der Heizung bei unveränderter, nur vom Abkühlverhalten der Anordnung abhängiger Ausschaltdauer erzielt werden konnte. Es ergaben sich also praktisch unveränderte Heizzyklen, die nach wie vor zu einer Überhitzung kleiner Kaffeemengen führte.

Der vorliegenden Erfindung liegt daher die Aufgabe zugrunde, eine einfache und kostengünstige Möglichkeit aufzuzeigen, um im Rahmen des vorstehend beschriebenen Kaffeemaschinen-Konzeptes die Heizleistung nach Beendigung der Brühphase den jeweiligen Gegebenheiten anzupassen und sie gegebenenfalls so zu reduzieren, daß insbesondere im Kleinmengenbetrieb eine Überhitzung des Kaffees auf der Warmhalteplatte nicht auftritt.

Diese Aufgabe wird erfindungsgemäß durch die im kennzeichnenden Teil des Patentanspruchs 1 angegebenen Mittel gelöst. In den abhängigen Ansprüchen sind besonders vorteilhafte Ausgestaltungen dieser Erfindung angegeben.

Die Erfindung beinhaltet die Erkenntnis, daß eine effektive Verringerung der Aufheizung des auf der Warmhalteplatte einer Kaffeemaschine abgestellten Kaffees dadurch erzielbar ist, daß das periodische Regel verhalten der Anordnung nicht während der jeweiligen Aufheizphase der Heizung, sondern während der Abkühlphase verändert wird. Zu diesem Zweck enthält die elektrische Kaffeemaschine nach der vorliegenden Erfindung elektrische Schaltungselemente, mittels derer jedesmal, wenn nach Beendigung des Brühvorganges am Reglerschalter dessen Ansprechtemperatur erreicht und infolgedessen der Heizstrom unterbrochen wird, die Dauer der Heizstromunterbrechung über die normalerweise bis zum Wiederschließen der Kontakte des Reglerschalters verstreichende Zeitspanne hinaus verlängerbar ist. Dabei ist unter der normalerweise bis zum Wiederschließen der Kontakte des Reglerschalters verstreichenden Zeitspanne diejenige Zeit zu verstehen, die ohne die besagten erfindungsgemäß vorgesehenen zusätzlichen elektrischen Schaltungselemente bis zum Wiederschließen des Heizstromkreises verstreichen würde.

Vorzugsweise wird die Erfindung dadurch realisiert, daß die Schaltelemente eine Hilfsheizung aufweisen, die zu dem Reglerschalter elektrisch parallelgeschaltet ist und durch die der Reglerschalter in durch Dimensionierung und thermische Kopplung der Hilfsheizung definierter Weise erwärmbar ist, sobald und solange seine Schaltkontakte geöffnet sind.

In einer anderen vorteilhaften Ausgestaltung der vorliegenden Erfindung wird die gestellte Aufgabe mit Hilfe eines Zeitschaltgliedes - beispielsweise einer Oszillator-Schaltung - gelöst, dessen Schaltkontakte zu den Schaltkontakten des Reglerschalters in Reihe geschaltet sind und das die Stromversorgung der Kaffeemaschinenheizung für eine vorgegebene Zeitdauer unterbricht, nachdem es gleichzeitig mit dem Öffnen der Schaltkontakte des Reglerschalters getriggert wurde. Dabei ist die durch das Zeitschaltglied bewirkte Dauer der Unterbrechung des Heizstromkreises selbstredend länger als die gemäß vorstehender Definition normalerweise bis zum Wiederschließen der Kontakte des Reglerschalters verstreichende Zeitspanne.

Vorzugsweise sind die zur Verzögerung des Wiedereinschaltens der Kaffeemaschinenheizung vorgesehenen Schaltungselemente, also beispielsweise die vorgeschlagene Hilfsheizung oder das triggerbare Zeitschaltglied, so ausgelegt, daß die Unterbrechungszeit auf das Zwei bis Fünffache ihres ersten Wertes verlängert wird.

In einer weiteren vorteilhaften Ausgestaltung sind die besagten Schaltungselemente zur Er-zeugung unterschiedlicher Heizstromunter-brechungsdauern manuell einstellbar, wodurch dem Benutzer der Kaffeemaschine die Möglichkeit gegeben ist, die Heizwirkung der Warmhalteplatte der jeweiligen oder üblicherweise zubereiteten Kaffeemenge anzupassen. Je nach Ausführungsform ist zu diesem Zweck bei-spielweise die Hilfsheizung verstellbar aus-geführt bzw. ein Zeitschaltglied eingesetzt, bei dem die nach der Triggerung ablaufende Öffnungszeit seiner im Heizungsstromkreis der Kaffeemaschine liegenden Schaltkontakte variabel ist.

Die Erfindung wird durch die beigefügte Zeichnung veranschaulicht, und zwar zeigen

Figur 1 das Aufbauprinzip und die elektrische Schaltung bei einer bevorzugten Ausführungsform der erfindungsgemäßen Kaffeemaschine,

Figur 2 den Schaltungsteil bei einer weiteren vorteilhaften Ausführungsform und

Figur 3a bis 3c den zeitlichen Verlauf der Temperatur am Reglerschalter und der Kaffee-Temperatur bei Anwendung der Schaltung gemäß Figur 1 so wie des Heizstromes, und zwar jeweils ohne und mit Anwendung der erfindungsgemäßen Kleinmengen-Schaltung.

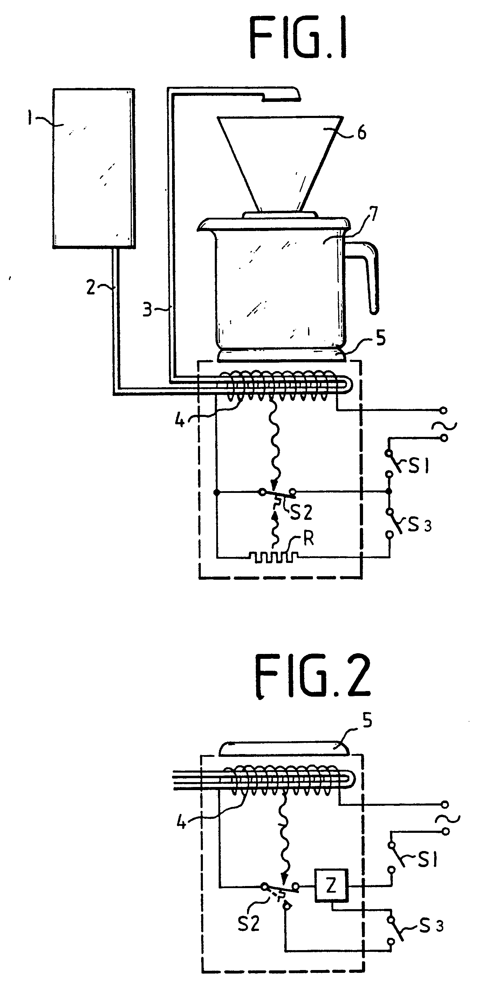

Wie Figur 1 zeigt, enthält eine Kaffeemaschine gemäß der vorliegenden Erfindung einen Kaltwasser-Vorratsbehälter 1, aus dem das Wasser durch ein Fallrohr 2 zum elektrischen Brühwassererhitzer gelangt, in dem es durch dessen Heizwiderstand 4 auf Siedetemperatur erhitzt und über ein Steigrohr 3 in den Filtertrichter 6 getrieben wird. Im Filtertrichter 6 extrahiert es das darin befindliche Kaffeemehl, und der entstehende Kaffee fließt in eine Kaffeekanne 7, die auf einer durch den Heizwiderstand 4 des Brühwassererhitzers erwärmten Warmhalteplatte 5 steht. Dem Brühwassererhitzer ist in üblicher Weise ein temperaturab-hängiger Reglerschalter $S_2$ zugeordnet, der den Heizstrom trotz geschlossenem Netzschalter $S_1$ unterbricht, sobald er durch den Brühwassererhitzer auf eine vorgegebene Maximaltemperatur $T_1$ von z. B. 145°C erhitzt wird und der nach Abkühlung auf seine Schließtemperatur $T_2$ von z. B. 130°C den Heizstrom wieder einschaltet. Die Dauer der auf diese Weise durch den Reglerschalter bewirkten Heizstromunterbrechung ist systemabhängig und beträgt beispielsweise 1,5 Minuten.

Über den Kleinmengenschalter $S_3$ ist erfin-dungsgemäß parallel zum Reglerschalter $S_2$ eine Hilfsheizung R zuschaltbar, deren Ohmscher Widerstand so groß bemessen ist, daß bei geschlossenem Reglerschalter $S_2$ über sie nur ein vernachlässigbar kleiner Strom fließt. Sobald dagegen der Reglerschalter bei Erreichen seiner Ausschalttemperatur $T_1$ seine Kontakte öffnet, liegt die Hilfsheizung R alleine mit dem Heiz widerstand 4 im Heizstromkreis und wegen des verhältnismäßig hohen Ohmschen Widerstandes der Hilfsheizung kann dann praktisch von einer Unterbrechung des Heizstromes gesprochen werden. In dieser Situation erwärmt die Hilfshei-zung R den Reglerschalter $S_2$ so, daß sich dessen Schaltkontakte erst mit einer erheblichen zeitlichen Verzögerung wieder schließen. Das Ausmaß dieser zeitlichen Verzögerung kann durch die Dimensionierung der Hilfsheizung R und deren thermische Kopplung zum Reglerschalter $S_2$ beeinflußt werden. Offenbar bewirkt diese seitliche Verzögerung, daß die Heizplatte 5 und der auf ihr abgestellte Kaffee nur in größeren Abständen erhitzt wird, woraus eine geringere Erwärmung des Kaffees resultiert.

Die in Figur 2 dargestellte Schaltung führt zu demselben Ergebnis: Hier ist in Reihe zu dem Reglerschalter $S_2$ ein Zeitschaltglied Z in den Heizstromkreis eingefügt. Sobald am Regler-schalter $S_2$ dessen Ansprechtemperatur $T_1$ er-reicht wird, unterbricht dieser - wie üblich - den Heizstromkreis, wobei er in die in Figur 2 ge-strichelt dargestellte Schaltstellung umschaltet und über eine Triggerleitung und den ge-schlossenen Kleinmengenschalter $S_3$ das Zeit-schaltglied Z triggert, so daß dieses für eine vorgewählte Zeitspanne, die beispielsweise das Dreifache der normalen, zwischen dem Öffnen des Reglerschalters bei der Temperatur $T_1$ und dessen Wiederschließen bei der Temperatur $T_2$ verstreichenden Zeitspanne beträgt. Auf diese Weise wird also ebenfalls eine erhebliche Verlängerung - beispielsweise eine Verdreifachung - der Heizstromunterbrechung erzielt.

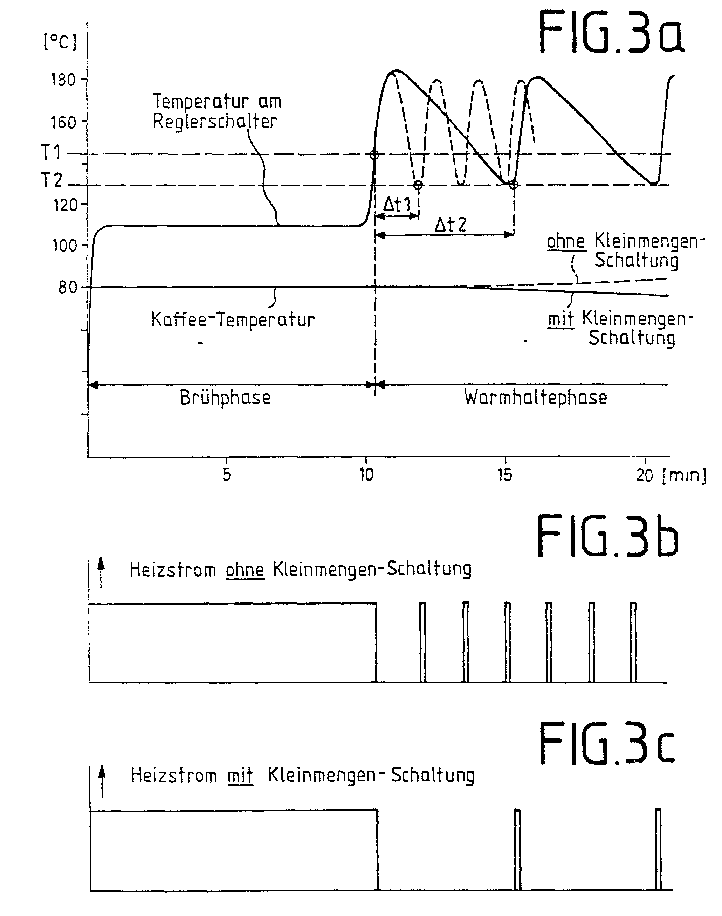

Die Figuren 3a bis 3c verdeutlichen den durch die Erfindung erzielbaren Effekt, wie er beispielsweise durch die in Figur 1 dargestellte Schaltung herbeigeführt werden kann. Wie Figur 3a zeigt, erwärmt sich der Reglerschalter während der Brühphase zunächst auf eine Temperatur von z. B. 110°C. Sobald das gesamte Wasser verkocht ist, steigt die Reglerschaltertemperatur steil an und erreicht die Ausschalttemperatur $T_1$. Anschließend verläuft die Reglerschaltertempe-ratur ohne die erf indungsgemäße Hilfsheizung R bzw. bei geöffnetem Kleinmengenschalter $S_3$ gemäß der in Figur 3a gestrichelt eingezeichneten Kurve; d. h., nach kurzem, durch die thermische Trägheit des Systems bedingtem Überschwingen erreicht sie nach der Zeitspanne $\Delta t_1$ die Wiedereinschalttemperatur $T_2$ des Regler-

schalters, und der nächste Aufheizzyklus beginnt. Insgesamt ergibt sich also etwa der in Figur 3b wiedergegebene Verlauf des Heizstromes mit dem Ergebnis, daß die Temperatur einer auf der Warmhalteplatte der Kaffeemaschine abgestellten kleinen Kaffeemenge, wie die diesbezügliche Kurve in Figur 3a zeigt, ausgehend von beispielsweise 80°C langsam ansteigt.

Mit der erfindungsgemäßen Kleinmengenschaltung verläuft die Temperatur am Reglerschalter nach Erreichen der Ausschalttemperatur $T_1$ dagegen entsprechend der in Figur 3a durchgezogenen Kurve. Infolge der Erwärmung durch die Hilfsheizung R kühlt der Reglerschalter $S_2$ erheblich langsamer ab, so daß er seine Wiedereinschalttemperatur $T_2$ erst nach einer erheblich längeren Zeitspanne $\Delta t_2$ erreicht. Es folgt wiederum eine kurze Aufheizung und eine, wie vorstehend beschrieben, verlängerte Abkühlphase. Der Heizstrom zeigt also etwa den in Figur 3c dargestellten Verlauf mit dem Ergebnis, daß die Kaffeetemperatur in der Warmhaltephase nicht mehr ansteigt, sondern auf etwa konstantem Niveau oder leicht abfallend verläuft.

Dasselbe Ergebnis - d. h. der Heizstromverlauf gemäß Figur 3c und die zeitlich konstante bzw. leicht abfallende Kaffeetemperatur auch bei kleinen Kaffeemengen gemäß Figur 3a wird sinngemäß mit der Schaltung gemäß Figur 2 erzielt.

Die vorliegende Erfindung schafft somit eine konstruktiv und schaltungstechnisch einfache und äußerst kostengünstige Möglichkeit, um bei Kaffeemaschinen des hier angesprochenen Typs einen Warmhaltebetrieb für kleine Kaffeemengen zu realisieren, bei dem es nicht zu einer Überhitzung und den damit verbundenen Geschmacksbeeinträchtigungen des Kaffees kommt. Neben diesem Ergebnis, mit dem die der Erfindung zugrundeliegende Aufgabe gelöst wird, bietet die vorliegende Erfindung mit den Schaltungselementen R bzw. Z grundsätzlich auch noch die Möglichkeit, auf einfache Weise eine nachträgliche Justierung bzw. Änderung des Regelverhaltens des Reglerschalters $S_2$ durchzuführen. Damit ergibt sich der fertigungstechnische Vorteil, ein und dasselbe Heizungssystem für ganz unterschiedlich dimensionierte Kaffeemaschinen einzusetzen.

Heizwiderstand (4) von seiner Betriebsspannung trennt und der nach seiner dadurch eintretenden Abkühlung auf eine ebenfalls festlegbare Schließtemperatur $(T_2)$ den Heizwiderstand (4) wieder mit seiner Betriebsspanung versorgt, so daß die Warmhalteplatte (5) nach Beendigung des Brühvorgangs periodisch für eine durch die Maximal- und die Schließtemperatur bestimmte Unterbrechungszeit nicht beheizt wird,

dadurch gekennzeichnet,

daß dem die Betriebsspannung des Heiz widerstandes (4) liefernden Stromkreis durch Schließen eines Kleinmengenschalters $(S_3)$ elektrische Schaltelemente (R, Z) zuschaltbar sind, die die Unterbrechungszeit von einem ersten Wert $(\Delta t_1)$ ohne zugeschaltete Schaltelemente (R, Z) auf einen zweiten Wert $(\Delta t_2)$ verlängern.

2. Elektrische Kaffeemaschine nach Anspruch 1,

dadurch gekennzeichnet,

daß die Schaltelemente eine Hilfsheizung (R) aufweisen, die zu dem Reglerschalter $(S_2)$ elektrisch parallelgeschaltet ist und durch die der Reglerschalter $(S_2)$ in durch Dimensionierung und thermische Kopplung der Hilfsheizung (R) definierter Weise erwärmbar ist, sobald und solange seine Schaltkontakte geöffnet sind.

3. Elektrische Kaffeemaschine nach Anspruch 1,

dadurch gekennzeichnet,

daß die Schaltelemente ein durch das Öffnen der Schaltkontakte des Reglerschalters $(S_2)$ triggerbares Zeitschaltglied (Z) aufweisen, dessen Schaltkontakte zu den Schaltkontakten des Reglerschalters $(S_2)$ in Reihe geschaltet sind und den Heizstromkreis für eine vorgegebene Zeitdauer $(\Delta t_2)$ nach der Triggerung unterbrechen.

4. Elektrische Kaffeemaschine nach einem der Ansprüche 1 bis 3,

dadurch gekennzeichnet,

daß die Schaltelemente (R bzw. Z) so ausgelegt sind, daß die Unterbrechungszeit auf das zwei- bis fünffache ihres ersten Wertes $(\Delta t_1)$ verlängert wird.

5. Elektrische Kaffeemaschine nach einem der Ansprüche 1 bis 3,

dadurch gekennzeichnet,

daß die besagten Schaltelemente (R bzw. Z) zur Erzeugung unterschiedlicher Uterbrechungszeiten manuell einstellbar sind.

## Patentansprüche

1. Kaffeemaschine mit einem elektrisch heheizten Brühwassererhitzer, dessen Heizwiderstand (4) gleichzeitig auch eine Warmhalteplatte (5) beheizt, auf der der in einer Kaffeekanne (7) vorgehaltene Kaffee nach Abschluß des Brühvorgangs warmgehalten wird, und mit einem temperaturgesteuerten, thermisch mit dem Brünwasseritzer gekoppelten Reglerschalter $(S_2)$, der sich erst nach Beendigung des Brühvorgangs auf eine festlegbare Maximaltemperatur $(T_1)$ aufheizen kann, bei deren Erreichen er den

## Claims

1. A coffee maker having an electrically heated brewing water heater whose heating resistor (4) heats at the same time a warming plate (5) on which the coffee contained in a carafe (7) is kept hot at the end of the brewing cycle, and a temperature-controlled regulating switch $(S_2)$ which is thermally coupled to said brewing water heater and heatable to a predeterminable maximum temperature $(T_1)$ not until after termination of the brewing cycle and which on attainment of said temperature disconnects said heating resistor (4) from its supply voltage and following its resultant cooling to an equally predeterminable closing temperature ($T_2$) reconnects said heating resistor (4) to its supply voltage, so that on termination of the brewing cycle the heating of said warming plate (5) is cyclically interrupted for a period of time determined by said maximum temperature and said closing temperature,

characterized in that by closing a small quantity switch ($S_3$) electrical circuit elements (R, Z) are adapted to be connected to the circuit supplying the operating voltage of said heating resistor (4), said elements extending the OFF period from a first value ($\Delta t_1$) which applies when said circuit elements (R, Z) are not connected, to a second value ($\Delta t_2$).

2. The electric coffee maker as claimed in claim 1,

characterized in that said circuit elements comprise a supplementary heating device (R) which is electrically connected in parallel to said regulating switch (22) and is adapted to heat said regulating switch ($S_2$) in a manner defined by the dimensioning and the thermal coupling of said supplementary heating device (R) as soon and as long as its switching contacts are open.

3. The electric coffee maker as claimed in claim 1,

characterized in that said circuit elements comprise a timing element (2) capable of being triggered by the opening of the switching contacts of said regulating switch ($S_2$), its switching contacts being connected in series with the switching contacts of said regulating switch ($S_2$) and interrupting the heater circuit for a predetermined period of time ($\Delta t_2$) after triggering.

4. The electric coffee maker as claimed in any one of the claims 1 to 3,

characterized in that said circuit elements (R or Z) are configured such that the OFF period is extended to two to five times the amount of its first value ($\Delta t_1$).

5. The electric coffee maker as claimed in any one of the claims 1 to 3,

characterized in that said circuit elements (R or Z) are manually adjustable for producing different OFF periods.

**Revendications**

1. Machine à café comportant: un chauffe-eau chauffé électriquement dont la résistance de chauffage (4) chauffe en outre simultanément une plaque de maintien au chaud (5) sur laquelle le café contenu dans un pot à café (7) est maintenu au chaud après l'expiration du processus d'échaudage; et un commitateur-régleur ($S_2$) qui est thermiquement couplé au chauffe-eau et qui, seulement après la fin du processus d'échaudage, peut s'échauffer à une température maximale déterminable ($T_1$), à laquelle il sépare la résistance de chauffage (4) de sa tension d'alimentation, et qui après son refroidissement ainsi intervenu jusqu'à une température de fermeture également déterminable ($T_2$) réalimente la résistance de chauffage (4) avec une tension de fonctionnement de manière qu'après la fin du processus d'échaudage la plaque de maintien au chaud (5) ne soit periodiquement pas chauffée pendant un temps d'interruption déterminé par la température maximale et la température de fermeture,

caractérisée

par le fait que des composants électriques (R, Z) allongeant le temps d'interruption en le faisant passer d'une première valeur ($\Delta t_1$) sans composants (R, Z) en condition de fermeture à une deuxième valeur ($\Delta t_2$) sont raccordables, par fermeture d'un interrupteur pour petite quantité ($S_3$), au circuit fournissant la tension de fonctionnement de la résistance de chauffage (4).

2. Machine à café électrique selon revendication 1,

caractérisée

par le fait que les composants présentent un chauffage auxiliaire (R) qui est électriquement relié en parallèle au commutateur-régleur ($S_2$), et par lequel le commutateur-régleur ($S_2$) peut être chauffé, de manière définie par le dimensionnement et le couplage thermique de ce chauffage auxiliaire (R), dès que et aussi longtemps que ses contacts de commutation sont ouverts.

3. Machine à café électrique selon revendication 1,

caractérisée

par le fait que les composants présentent un élément de commutation temporisé (Z) déclenchable par l'ouverture des contacts de commutation du commutateur-régleur ($S_2$), les contacts de commutation de cet élément étant raccordés en série aux contacts de commutation du commutateur-régleur ($S_2$) et interrompant le circuit de chauffage pendant une durée prédéterminée ($\Delta t_2$) après le déclenchement.

4. Machine à café électrique selon l'une des revendications 1 à 3,

caractérisée

par le fait que les composants (R, Z) sont conçus de manière que le temps d'interruption soit allongé à deux à cinq fois sa première valeur ($\Delta t_1$).

5. Machine à café électrique selon l'une des revendications 1 à 3,

caractérisée

par le fait que lesdits composants (R, Z) sont réglables manuellement pour produire différents temps d'interruption.

# FIG.1

# FIG.2

# FIG.3a

[°C]

180

160

T1

T2

120

100

80

Temperatur am Reglerschalter

ohne Kleinmengen-Schaltung

mit Kleinmengen-Schaltung

Kaffee-Temperatur

Δt1

Δt2

Brühphase

Warmhaltephase

5    10    15    20 [min]

# FIG.3b

Heizstrom ohne Kleinmengen-Schaltung

# FIG.3c

Heizstrom mit Kleinmengen-Schaltung

3